# EUROPÄISCHE PATENTANMELDUNG

(11) **EP 2 354 588 A2**
(43) Veröffentlichungstag der Anmeldung: **10.08.2011**
(21) Anmeldenummer: 10015927.6
(22) Anmeldetag: 22.12.2010
(51) Int. Cl.: F16F 9/46

(54) **Kolben-Zylinderaggregat**

(30) Priorität: 29.01.2010 DE 102010006117
(71) Anmelder: Stabilus GmbH, 56070 Koblenz (DE)
(72) Erfinder: Born, Frank, 56379 Dienethal (DE)

(57) **Zusammenfassung**

Kolben-Zylinderaggregat (1) mit einem mit unter Druck stehendem Fluid gefüllten Arbeitszylinder (2), einer koaxial zum Arbeitszylinder (2) angeordneten, in dem Arbeitszylinder (2) entlang einer Mittellängsachse (A) verschiebbaren hohlen Kolbenstange (3), die an dem sich außerhalb des Arbeitszylinders befindenden Ende ein Anschlusselement (8) und an dem sich in dem Arbeitszylinder befindenden Ende einen den Arbeitszylinder (2) in einen ersten Arbeitsraum (15) und einen zweiten Arbeitsraum (16) teilenden Kolben (4) aufweist, und einer in der Kolbenstange (3) angeordneten Ventilnadel (6), wobei in der Kolbenstange (3) wenigstens ein in axialer Richtung verlaufender Durchflusskanal (25) angeordnet ist und die Ventilnadel (6) an einem Ende eine Ausnehmung (31) aufweist, wobei die Ventilnadel (6) in eine Lage drehbar ist, sodass sich Ausnehmung (31) und Durchflusskanal (25) in einem definierten Bereich gegenüberliegen und ein Fluidenfluss steuerbar ist. An dem außerhalb des Arbeitszylinders (2) liegenden Ende der Ventilnadel (6) ist ein sich in radialer Richtung erstreckender Hebel (10) ausgebildet, der von einer Verstelleinheit (32) verschwenkbar beaufschlagt wird, wobei die Verstelleinheit (32) vollständig außerhalb des Kraftflusses des Kolben-Zylinderaggregats (1) an dem Anschlusselement (8) angeordnet ist

## Beschreibung

Die Erfindung betrifft ein Kolben-Zylinderaggregat mit einem mit unter Druck stehendem Fluid gefüllten Arbeitszylinder, einer koaxial zum Arbeitszylinder angeordneten, in dem Arbeitszylinder entlang einer Mittellängsachse verschiebbaren hohlen Kolbenstange, die an dem sich außerhalb des Arbeitszylinders befindenden Ende ein Anschlusselement und an dem sich in dem Arbeitszylinder befindenden Ende einen den Arbeitszylinder in einen ersten Arbeitsraum und einen zweiten Arbeitsraum teilenden Kolben aufweist, und einer in der Kolbenstange angeordneten Ventilnadel, wobei in der Kolbenstange wenigstens ein in axialer Richtung verlaufender Durchflusskanal angeordnet ist und die Ventilnadel an einem Ende eine Ausnehmung aufweist, wobei die Ventilnadel in eine Lage drehbar ist, sodass sich Ausnehmung und Durchflusskanal in einem definierten Bereich gegenüberliegen und ein Fluidenfluss steuerbar ist.

Ein derartiges Kolben-Zylinderaggregat ist aus der DE 10 2007 018 582 A1 bekannt.

Aufgabe der Erfindung ist es, ein funktionssicheres und kostengünstiges Kolben-Zylinderaggregat mit einer elektrischen Verstelleinheit zu schaffen, das eine geringe Baulänge aufweist.

Diese Aufgabe wird dadurch gelöst, dass an dem außerhalb des Arbeitszylinders liegenden Ende der Ventilnadel ein sich in radialer Richtung erstreckender Hebel ausgebildet ist, der von einer Verstelleinheit verschwenkbar beaufschlagt wird, wobei die Verstelleinheit vollständig außerhalb des Kraftflusses des Kolben-Zylinderaggregats angeordnet ist.

In weiterer Ausgestaltung umfasst die Verstelleinheit ein Gehäuse, in dem ein elektrisch angetriebener Motor und optional ein Getriebe untergebracht sind, wobei aus dem Gehäuse achsparallel zur Ventilnadel eine durch den Motor bzw. das Getriebe antreibbare Welle herausragt, die sich durch eine erste Anschlussplatte eines Befestigungselements zum befestigen des Gehäuses an das Anschlusselement hindurch erstreckt.

Um die Montage einfach zu gestalten, umfasst das Befestigungselement erfindungsgemäß eine mit dem Gehäuse verbindbare erste Anschlussplatte und eine mit dem Anschlusselement verbindbare zweite Anschlussplatte, wobei die zweite Anschlussplatte eine Öffnung aufweist, die in Überdeckung mit einer Bohrung im Anschlusselement bringbar ist, um die zweite Anschlussplatte über einen Bolzen mit dem Anschlusselement zu verbinden.

Ein besonders einfacher Aufbau der Verstelleinheit wird dadurch erreicht, dass erste und zweite Anschlussplatte einteilig ausgebildet und in einem Winkel von im Wesentlichen 90° zueinander angeordnet sind.

Ein sicherer Anschluss der Verstelleinheit an das Anschlusselement wird dadurch erreicht, dass an der zweiten Anschlussplatte ein eine Kante des Anschlusselements wenigstens teilweise umgreifender Fortsatz und an der ersten Anschlussplatte eine Flankierwand ausgebildet ist.

Erfindungsgemäß ist an der Welle eine Scheibe befestigt, die eine Ausnehmung und eine Aufnahmevorrichtung aufweist, wobei in der Aufnahmevorrichtung ein Bolzen drehbar gelagert ist, der eine radial zu seiner Längsachse verlaufende Durchgangsbohrung aufweist, durch die sich der Hebel erstreckt.

In vorteilhafter Weise ist an der der Scheibe zugewandten Seite der ersten Anschlussplatte ein Anschlagsnocken mit einer ersten Anschlagsfläche und einer zweiten Anschlagsfläche ausgebildet, der in die Ausnehmung der Scheibe ragt.

In einer weiteren Ausführungsform ist in dem Gehäuse ein die Welle in Drehung versetzender Schrittmotor angeordnet, wobei die Welle als Gewindespindel ausgebildet ist und sich im Wesentlichen senkrecht zur Mittellängsachse der Kolbenstange bzw. Ventilstifts erstreckt.

In weiterer Ausgestaltung sind erste und zweite Anschlussplatte über eine Verbindungsplatte miteinander verbunden und im Wesentlichen parallel zueinander ausgerichtet, wobei sich von der zweiten Anschlussplatte ein Steg über die Verbindungsplatte in Richtung erste Verbindungsplatte erstreckt.

Erfindungsgemäß ist auf dem Anschlusselement und der zweiten Anschlussplatte liegend ein Schlitten angeordnet, der im Querschnitt betrachtet eine im Wesentlichen U-förmige Ausgestaltung mit einer Basis, einem ersten Schenkel und einen zweiten Schenkel aufweist.

Vorteilhafterweise weisen die Schenkel des Schlittens an der der ersten Anschlussplatte zugewandten Seite jeweils eine Aussparung auf, in die eine quaderförmige Spindelmutter eingelegt ist, durch die sich die Welle erstreckt.

Damit der Schlitten sicher geführt wird weist der Haltefinger ein im Wesentlichen U-förmiges Profil auf und umgreift den ersten Schenkel des Schlittens. Ferner ist in dem zweiten Schenkel des Schlittens eine Bohrung vorgesehen, durch die sich der Bolzen drehbar hindurch erstreckt, wobei der Bolzen einen Axialschlitz aufweist, in den der Hebel hineinragt, wodurch die Montage erleichtert wird.

Die Erfindung wird anhand der nachstehenden Zeichnungen beschrieben. Es zeigen:
- Figur 1: ein Kolben-Zylinderaggregat im Längsschnitt
- Figur 2: eine erste Ausführungsform der erfindungsgemäßen Verstelleinheit
- Figur 3: eine weitere detaillierte Ansicht der erfindungsgemäßen Verstelleinheit aus Figur 2
- Figur 4: eine zweite Ausführungsform der erfindungsgemäßen Verstelleinheit
- Figur 5: eine weitere detaillierte Ansicht der erfindungsgemäßen Verstelleinheit aus Figur 4
- Figur 6: eine detaillierte Darstellung eines Bauteils aus Figur 4

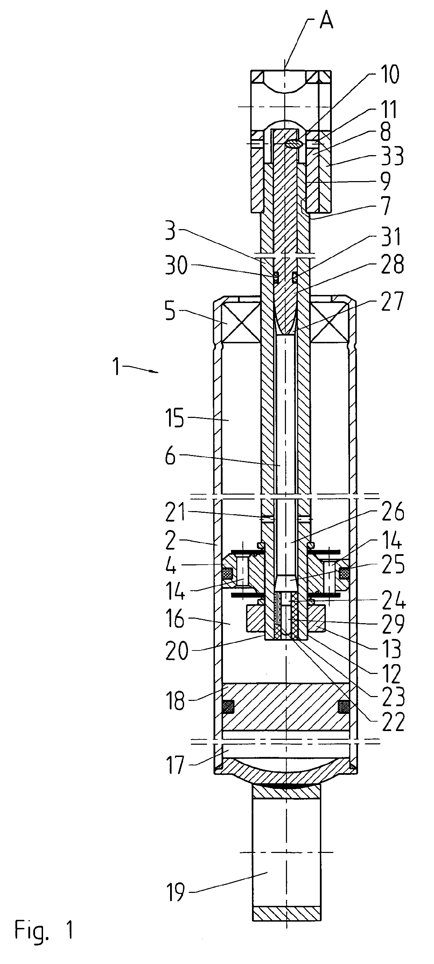

Figur 1 zeigt ein bekanntes Kolben-Zylinderaggregat 1 in Form eines Einrohrdämpfers mit einem Zylinder 2, einer in dem Zylinder 2 verschiebbar angeordneten hohlen Kolbenstange 3 und einem daran angeordneten Kolben 4. Die Kolbenstange 3 wird an einem Ende des Zylinders 2 durch eine Dichtungs- und Führungseinrichtung 5 aus dem Zylinder 2 herausgeführt. Über die Dichtungs- und Führungseinrichtung 5 wird die Kolbenstange 3 koaxial zum Zylinder 2 und entlang einer Mittellängsachse A hin- und herbewegbar geführt und das Innere des Zylinders 2 gegenüber der Umgebung abgedichtet.

In der hohlen Kolbenstange 3 ist eine Ventilnadel 6 angeordnet, mit deren Hilfe die Dämpfkraft des Kolben-Zylinderaggregats verändert werden kann.

An dem dem Kolben 4 gegenüberliegenden Ende der Kolbenstange 3 befindet sich ein Außengewinde 7 mittels dem ein Anschlusselement 8 mit einem Innengewinde 9 befestigbar ist. Ein Ende der Ventilnadel 6 ist aus dem anschlussseitigen Ende der Kolbenstange 3 herausgeführt, wobei sich an dem herausgeführten Ende der Ventilnadel 6 ein Hebel 10 in radialer Richtung von dieser durch eine Öffnung 11 in dem Anschlusselement 8 erstreckt. Das dem Anschlusselement 8 entgegengesetzte Ende der Kolbenstange 3 weist ebenfalls ein Außengewinde 12 auf, auf das der Kolben 4 aufgeschraubt wird. Eine ebenfalls auf das Außengewinde 12 aufgeschraubte Kontermutter 13 stellt sicher, dass sich der Kolben 4 nicht von der Kolbenstange 3 löst. Andere Verbindungstechniken, beispielsweise Verstemmen oder Schweißen, sind jedoch auch vorstellbar.

Vorzugsweise umfasst der Kolben 4 wenigstens eine Drosselbohrung 14, über die das Fluid, vorzugsweise Öl, von einem ersten Arbeitsraum 15 zu einem zweiten Arbeitsraum 16 oder umgekehrt strömen kann.

An den zweiten Arbeitsraum 16 schließt sich ein Ausgleichsraum 17 an, wobei zweiter Arbeitsraum 16 und Ausgleichsraum 17 durch einen Trennkolben 18 von einander getrennt werden.

An dem der Dichtungs- und Führungseinrichtung 5 gegenüberliegenden Ende des Zylinders 2 ist ein Anschlusselement 19 in Form eines Gelenkauges angeordnet.

An einem Ende der Kolbenstange 3, welches sich im Zusammenbau des Kolben-Zylinderaggregats 1 im Inneren des Zylinders 2 befindet, ist ein Bereich 20 mit einem geringeren Durchmesser ausgebildet, an dem der Kolben 4 angeordnet ist. An dem dem Bereich 20 gegenüberliegenden Ende ist das Anschlusselement 8 angeordnet, durch das sich der mit der Ventilnadel 6 verbundene Hebel 10 radial nach außen erstreckt.

In dem Bereich der Kolbenstange, der sich von dem Bereich 20 mit geringerem Durchmesser bis zu dem Anschlusselement 8 erstreckt, ist wenigstens eine Bohrung 21 vorgesehen, durch die das Fluid in die hohle Kolbenstange 3 hineinströmen kann, wenn die Kolbenstange 3 aus dem Kolben-Zylinderaggregat 1 herausbewegt wird, oder herausströmt, wenn die Kolbenstange 3 in das Kolben-Zylinderaggregat 1 hineinbewegt wird und dabei die Ventilnadel 6 einen Durchflusskanal 22 freigegeben hat.

In der hohlen Kolbenstange 3 ist vorzugsweise in dem Bereich 20 eine zylinderförmige Hülse 23 angeordnet. Die Hülse 23 weist einen nicht gezeigten Vorsprung auf, der in eine ebenfalls nicht gezeigte Aussparung in der Kolbenstange 3 hineinpasst, um eine Verdrehsicherung zu bilden. Die Hülse 23 weist ferner den wenigstens einen Durchflusskanal 22 auf, der sich von dem dem ersten Arbeitsraum 15 zugewandten Ende der Hülse 23 in axialer Richtung an der Innenseite der Hülse 23 erstreckt und vor Erreichen des dem zweiten Arbeitsraum 16 zugewandten Endes der Hülse 23 endet.

Die Ventilnadel 6 erstreckt sich in axialer Richtung vom kolbenseitigen Ende der Kolbenstange 3 bis in das Anschlusselement 8. Die Ventilnadel 6 weist mehrere Abschnitte mit unterschiedlichen Durchmessern auf. Ein erster Abschnitt 24 befindet sich an dem im Kolben-Zylinderaggregat 1 liegenden Ende der Kolbenstange 3 in der Hülse 23. An den Abschnitt 24 schließt sich in axialer Richtung ein konisch ausgebildeter zweiter Abschnitt 25 an, der zum Abschnitt 24 hin einen größeren Durchmesser aufweist und im Wesentlichen dem Innendurchmesser der Innenwand der Kolbenstange 3 entspricht oder geringfügig kleiner ist. Abschnitt 24 und 25 bilden somit eine Stufe, wodurch sich die Ventilnadel 6 an der Hülse 23 abstützt und eine axiale Verschiebung der Ventilnadel 6 vermieden wird. Ein dritter Abschnitt 26 mit einem geringerem Durchmesser als dem Durchmesser der Innenwand der Kolbenstange 3 schließt sich an den zweiten Abschnitt 25 an, gefolgt von einem konisch ausgebildeten vierten Abschnitt 27, wobei sich der Durchmesser zu einem fünften Abschnitt 28 hin vergrößert. Der Abschnitt 28 weist einen Durchmesser auf, der im Wesentlichen dem Innendurchmesser der Innenwand der Kolbenstange 3 entspricht oder geringfügig kleiner ist.

Die Ventilnadel 6 weist in dem ersten Abschnitt 24 eine Ausnehmung 29 auf, die sich von dem dem zweiten Arbeitsraum 16 zugewandten Ende der Ventilnadel 6 in axialer Richtung und somit in Richtung zweiter Abschnitt 25 erstreckt und vor Erreichen des Bereichs der Hülse 23 endet, der dem dem ersten Arbeitsraum 15 zugewandt ist. Durch Drehen der Ventilnadel 6 kann die Ausnehmung 29 zu wenigstens einem der Durchflusskanäle 22 derart in Überdeckung gebracht werden, dass parallel zu den im Kolben 4 ausgebildeten Drosselbohrungen 14 ein Fluidenfluss ermöglicht wird.

In dem Bereich der Kolbenstange 3, in dem der dritte Abschnitt 26 der Ventilnadel 6 liegt, ist die Bohrung 21 angeordnet, damit ein Überströmen des Fluids von einem Arbeitsraum zum anderen stattfinden kann.

Der fünfte Abschnitt 28 der Ventilnadel 6 weist eine umlaufende Ringnut 30 auf, in die ein Dichtring 31, vorzugsweise eine O-Ringdichtung eingesetzt wird, damit das Fluid nicht über die hohle Kolbenstange 3 nach außen treten kann. An dem dem Anschluss 8 zugeordneten fünften Abschnitt 28 der Ventilnadel 6 ist der Hebel 10 angeordnet und aus dem Anschlusselement 8 durch die Öffnung 11 herausgeführt, mit dessen Hilfe die Ventilnadel 6 bewegt werden kann.

In der Figur 1 ist die Ventilnadel 6 so eingestellt, dass durch die Kolbenstange 3 kein Fluidenstrom möglich ist. Wird der Hebel 10 aus seiner hier dargestellten rechten Position nach links bewegt, wird die Ventilnadel 6 gedreht, die Ausnehmung 29 und wenigstens ein Durchflusskanal 22 der Hülse 23 gelangen in Überdeckung und ein Überströmen des Fluids von einem Arbeitsraum in den anderen wird ermöglicht.

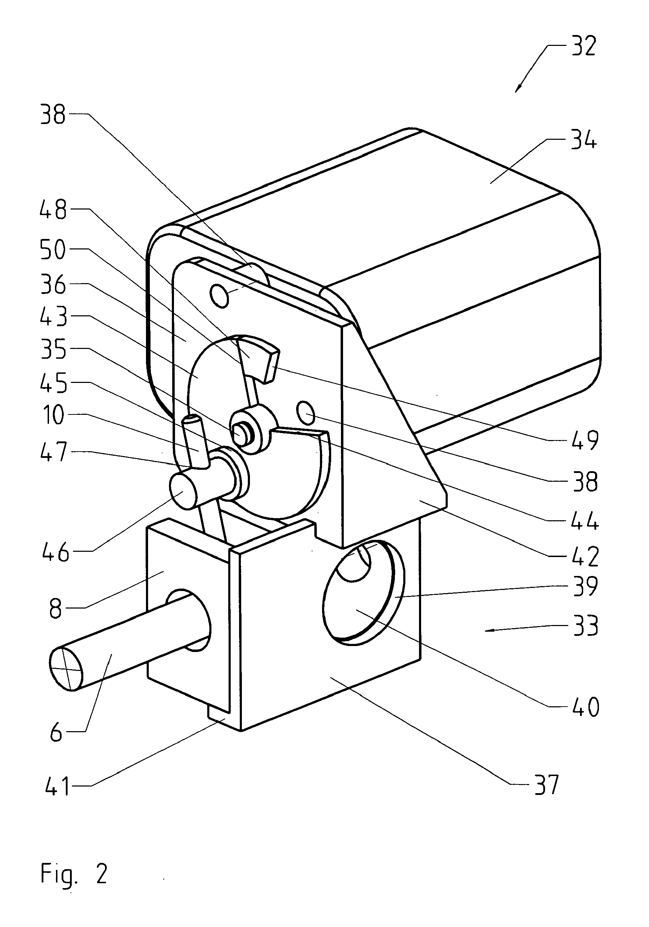

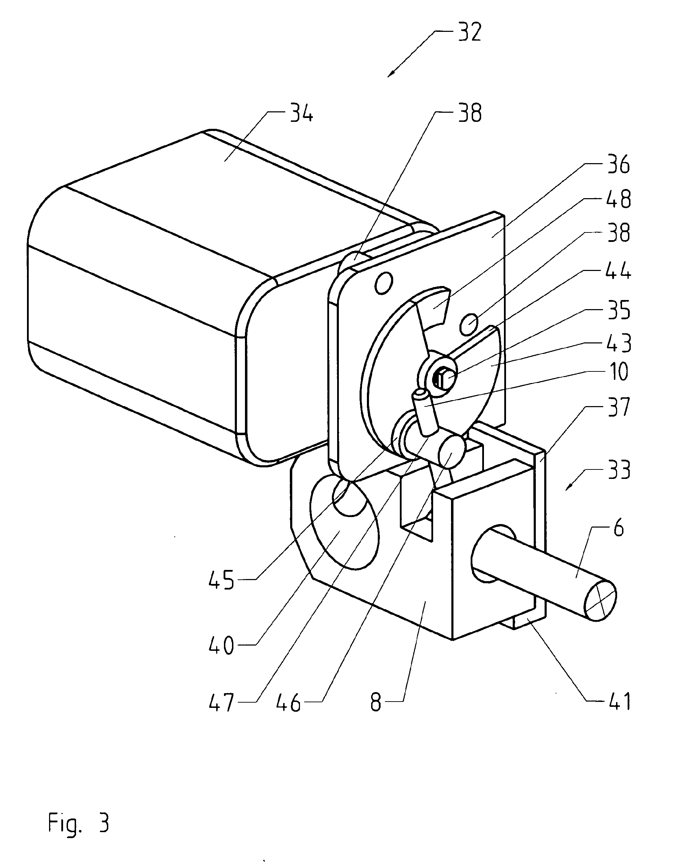

An dem Anschlusselement 8 ist eine in den Figuren 2 und 3 detaillierter dargestellte elektrische Verstelleinheit 32 angeordnet, von der jedoch nur ein Teil eines Befestigungselements 33 in Figur 1 sichtbar ist. Die Verstelleinheit 32 kann bei entsprechender Ansteuerung die Ventilnadel 6 über den Hebel 10 in eine andere Position drehen, um somit die Dämpfkraft des Kolben-Zylinderaggregats 1 zu verstellen.

Weiter ist in den Figuren 2 und 3 zu erkennen, dass die Verstelleinheit 32 ein Gehäuse 34 umfasst, in dem ein elektrisch angetriebener Motor und gegebenenfalls noch ein Getriebe untergebracht sind. Aus dem Gehäuse 34 ragt achsparallel zur Ventilnadel 6 eine durch den Motor bzw. das Getriebe antreibbare Welle 35 heraus, die sich durch eine erste Anschlussplatte 36 des Befestigungselements 33 hindurch erstreckt. Über das Befestigungselement 33 ist das Gehäuse 34 mit dem Anschlusselement 8 verbindbar.

Das Befestigungselement 33 umfasst neben der mit dem Gehäuse 34 verbindbaren ersten Anschlussplatte 36 eine mit dem Anschlusselement 8 verbindbare zweite Anschlussplatte 37. Die erste Anschlussplatte 36 weist zwei Verbindungseinrichtungen 38 auf, die als Abstandshalter zum Gehäuse 34 und gleichzeitig zur Aufnahme von nicht gezeigten Schrauben dienen, um die erste Anschlussplatte 36 an das Gehäuse 34 zu schrauben. Die zweite Anschlussplatte 37 weist eine Öffnung 39 auf, die in Überdeckung mit einer Bohrung 40 im Anschlusselement 8 gebracht wird. Mit einem nicht gezeigten sich durch die Öffnung 39 und die Bohrung 40 erstreckenden Bolzen ist die zweite Anschlussplatte 37 mit dem Anschlusselement 8 verbindbar.

Erste und zweite Anschlussplatte sind einteilig ausgebildet und in einem Winkel von im Wesentlichen 90° zueinander angeordnet. Um das Befestigungselement 33 stabiler zu gestalten und richtig an dem Anschlusselement 8 anzuordnen, ist an der zweiten Anschlussplatte 37 ein eine Kante des Anschlusselements 8 wenigstens teilweise umgreifender Fortsatz 41 und an der ersten Anschlussplatte 36 eine Flankierwand 42 ausgebildet.

An der Welle 35 ist eine Scheibe 43 befestigt, die eine Ausnehmung 44 und eine Aufnahmevorrichtung 45 aufweist. In der Aufnahmevorrichtung 45 ist ein Bolzen 46 drehbar gelagert. Der Bolzen 46 weist eine radial zu seiner Längsachse verlaufende Durchgangsbohrung 47 auf, durch die sich der Hebel 10 erstreckt. Der Bolzen 46 kann einen in der Scheibe 43 sitzenden, nicht dargestellten Kopf mit größerem Durchmesser an der der ersten Anschlussplatte 36 zugewandten Seite aufweisen, um verliersicher in der Aufnahmeeinrichtung 45 zu sitzen.

An der der Scheibe 43 zugewandten Seite der ersten Anschlussplatte 36 ist ein Anschlagsnocken 48 mit einer ersten Anschlagsfläche 49 und einer zweiten Anschlagsfläche 50 ausgebildet, der in die Ausnehmung 44 der Scheibe 43 ragt. Die Scheibe 43 und die Welle 35 können nur solange eine Drehbewegung durchführen, bis die Scheibe 43 an den Anschlagsnocken 48 in Anlage gelangt. Bei Anlage der Scheibe 43 an der ersten Anschlagsfläche 49 des Anschlagsnockens 48 ist die Ventilnadel 6 so gedreht, dass ein Fluidenfluss von einem Arbeitsraum zum anderen möglich ist, bei Anlage an der zweiten Anschlagsfläche 50 ist der wenigstens eine Durchflusskanal 22 geschlossen.

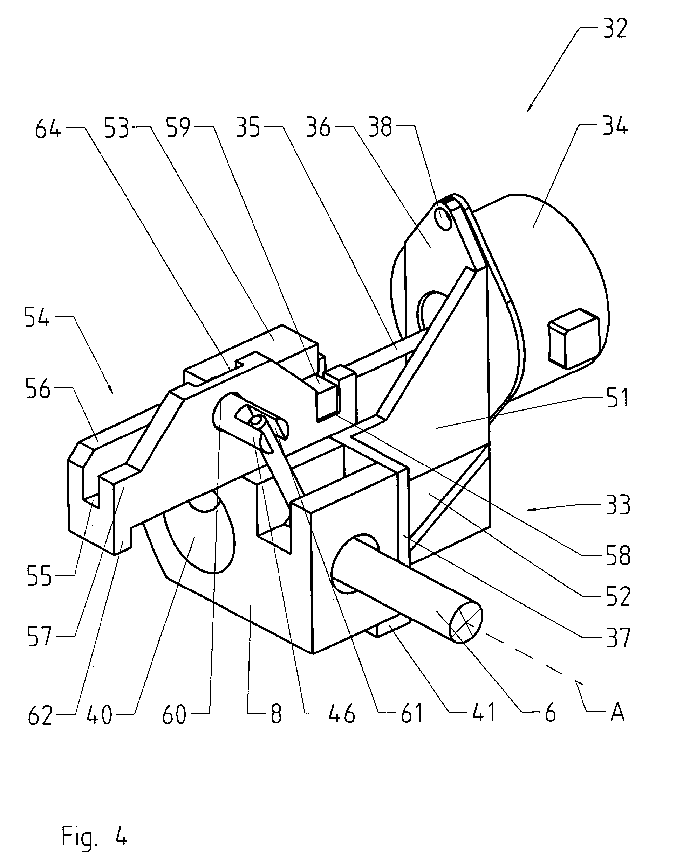

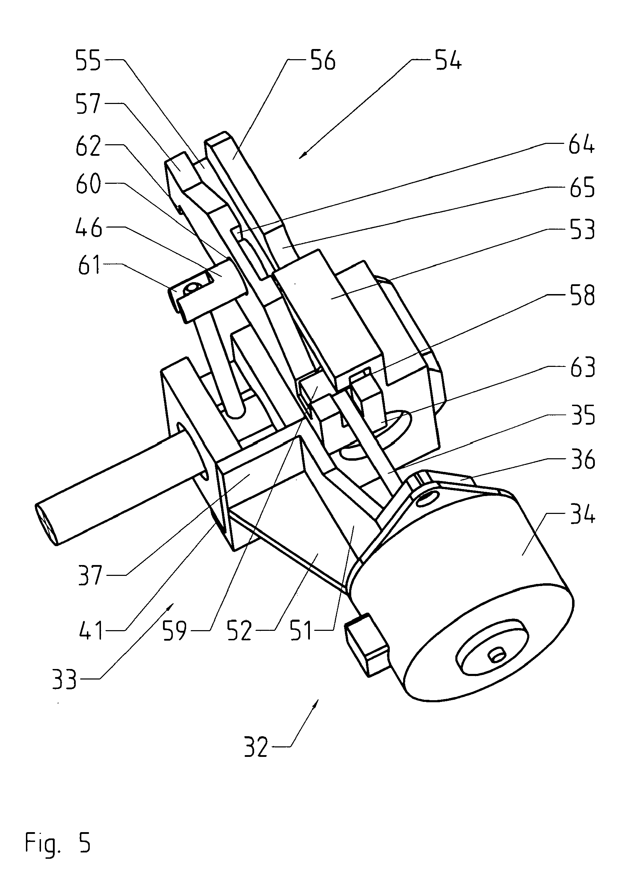

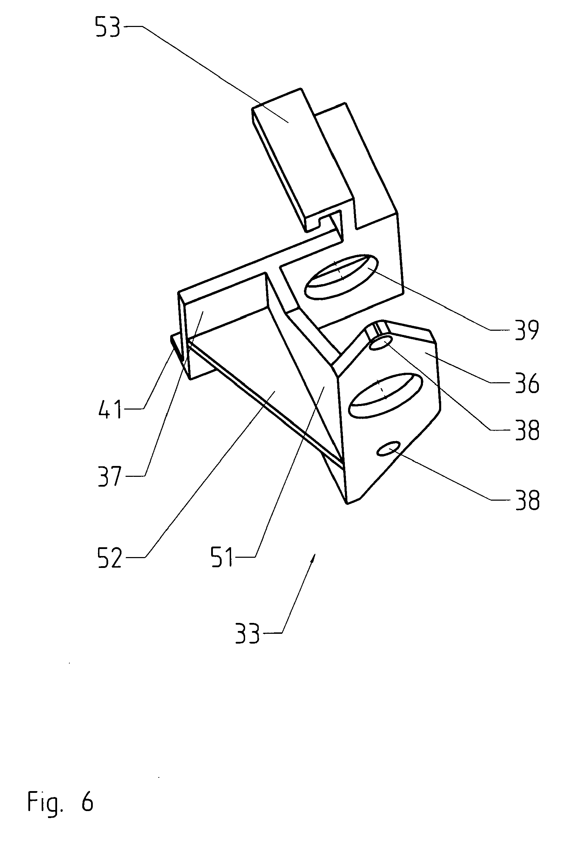

Die Figuren 4 und 5 zeigen eine weitere erfindungsgemäße Ausführungsform der Verstelleinheit 32. In dem Gehäuse 34 ist ein Schrittmotor angeordnet, der die Welle 35 in Drehung versetzen kann. Die Welle 35 ist als Gewindespindel ausgebildet, wobei sich die Wellenachse im Wesentlichen senkrecht zur Mittellängsachse A erstreckt. Das Gehäuse 34 ist über das Befestigungselement 33 mit dem Anschlusselement 8 verbindbar. Das im Detail auch in Figur 6 gezeigte Befestigungselement 33 umfasst eine mit dem Gehäuse 34 verbindbare erste Anschlussplatte 36 und eine mit dem Anschlusselement 8 verbindbare zweite Anschlussplatte 37. Die erste Anschlussplatte 36 weist zwei Verbindungseinrichtungen 38 auf, die zur Aufnahme von nicht gezeigten Schrauben dienen, um die erste Anschlussplatte 36 an das Gehäuse 34 zu schrauben. Die zweite Anschlussplatte 37 weist eine am besten in der Figur 6 sichtbare Öffnung 39 auf, die in Überdeckung mit der Bohrung 40 im Anschlusselement 8 gebracht wird. Mit einem nicht gezeigten sich durch die Öffnung 39 und die Bohrung 40 erstreckenden Bolzen ist die zweite Anschlussplatte 37 mit dem Anschlusselement 8 verbindbar.

Erste und zweite Anschlussplatte sind über eine Verbindungsplatte 51 miteinander verbunden und im Wesentlichen parallel zueinander ausgerichtet. Um die Verbindungsplatte 51 stabiler zu gestalten erstreckt sich von der zweiten Anschlussplatte 37 ein Steg 52 über die Verbindungsplatte 51 in Richtung erste Verbindungsplatte 36.

Zur Stabilisierung des Befestigungselements 33 ist an der zweiten Anschlussplatte 37 der eine Kante des Anschlusselements 8 wenigstens teilweise umgreifende Fortsatz 41 ausgebildet. Die zweite Anschlussplatte 37 umfasst ferner einen Haltefinger 53, dessen Funktion nachstehend erläutert werden soll. Auf dem Anschlusselement 8 und der zweiten Anschlussplatte 37 liegend ist ein Schlitten 54 angeordnet, der im Querschnitt betrachtet eine im Wesentlichen U-förmige Ausgestaltung mit einer Basis 55, einem ersten Schenkel 56 und einen zweiten Schenkel 57 aufweist.

Die Schenkel 56, 57 des Schlittens 54 weisen an der der ersten Anschlussplatte 36 zugewandten Seite jeweils eine Aussparung 58 auf, in die eine quaderförmige Spindelmutter 59 eingelegt ist. Durch die Spindelmutter 59 erstreckt sich die Welle 35, um den Schlitten 54 hin- und herbewegen zu können. Der Haltefinger 53 weist ebenfalls ein im Wesentlichen U-förmiges Profil auf und umgreift den ersten Schenkel 56 des Schlittens 54 damit dieser sicher geführt wird. In dem zweiten Schenkel 57 des Schlittens 54 ist eine Bohrung 60 vorgesehen, durch die sich der Bolzen 46 drehbar hindurch erstreckt. Zur besseren Montage weist der Bolzen 46 einen Axialschlitz 61 auf, in den der Hebel 10 hineinragt.

An den beiden Enden des Schlittens 54 stehen Anschlagseinrichtungen 62 und 63 von der Basis 55 an der den Schenkeln 56 und 57 gegenüberliegenden Seite hervor, die den Verfahrweg des Schlittens 54 begrenzen. Der Verfahrweg ist dabei so gewählt, dass der Bolzen 46 immer von dem Haltefinger 53 überdeckt ist, damit dieser nicht aus der Bohrung 60 herausfallen kann. Damit der Bolzen 46 einfacher in die Bohrung 60 eingesetzt werden kann und der Schlitten 54 am Kopf des Bolzens 46 an dem Haltefinger 53 vorbei gleiten kann, ist an dem ersten Schenkel 56 des Schlittens 54 eine Kehlung 64 vorgesehen und an dem zweiten Schenkel 57 eine Vertiefung 65 für den Kopf des Bolzens 46 ausgebildet.

Bei Anlage der Anschlagseinrichtung 63 an der zweiten Anschlussplatte 37 ist die Ventilnadel 6 so gedreht, dass ein Fluidenfluss von einem Arbeitsraum zum anderen möglich ist, bei Anlage der Anschlagseinrichtung 62 an dem Anschlusselement 8 ist die Ventilnadel 6 so gedreht, dass der wenigstens eine Durchflusskanal 22 geschlossen ist.

### Bezugszeichenliste

- 1: Kolben-Zylinderaggregat
- 2: Zylinder
- 3: Kolbenstange
- 4: Kolben
- 5: Dichtungs- und Führungseinrichtung
- 6: Ventilnadel
- 7: Außengewinde
- 8: Anschlusselement
- 9: Innengewinde
- 10: Hebel
- 11: Öffnung
- 12: Außengewinde
- 13: Kontermutter
- 14: Drosselbohrung
- 15: erster Arbeitsraum
- 16: zweiter Arbeitsraum
- 17: Ausgleichsraum
- 18: Trennkolben
- 19: Anschlusselement
- 20: Bereich
- 21: Bohrung
- 22: Durchflusskanal
- 23: Hülse
- 24: erster Abschnitt
- 25: zweiter Abschnitt
- 26: dritter Abschnitt
- 27: vierter Abschnitt
- 28: fünfter Abschnitt
- 29: Ausnehmung
- 30: Ringnut
- 31: Dichtungsring
- 32: Verstelleinheit
- 33: Befestigungselement
- 34: Gehäuse
- 35: Welle
- 36: erste Anschlussplatte
- 37: zweite Anschlussplatte
- 38: Verbindungseinrichtung
- 39: Öffnung
- 40: Bohrung
- 41: Fortsatz
- 42: Flankierwand
- 43: Scheibe
- 44: Ausnehmung
- 45: Aufnahmevorrichtung
- 46: Bolzen
- 47: Durchgangsbohrung
- 48: Anschlagnocken
- 49: erste Anschlagsfläche
- 50: zweite Anschlagsfläche
- 51: Verbindungsplatte
- 52: Steg
- 53: Haltefinger
- 54: Schlitten
- 55: Basis
- 56: erster Schenkel
- 57: zweiter Schenkel
- 58: Aussparung
- 59: Spindelmutter
- 60: Bohrung
- 61: Axialschlitz
- 62: Anschlagseinrichtung
- 63: Anschlagseinrichtung
- 64: Kehlung
- 65: Vertiefung

## Patentansprüche

1. Kolben-Zylinderaggregat (1) mit
einem mit unter Druck stehendem Fluid gefüllten Arbeitszylinder (2),
einer koaxial zum Arbeitszylinder (2) angeordneten, in dem Arbeitszylinder (2) entlang einer Mittellängsachse (A) verschiebbaren hohlen Kolbenstange (3), die an dem sich außerhalb des Arbeitszylinders befindenden Ende ein Anschlusselement (8) und an dem sich in dem Arbeitszylinder befindenden Ende einen den Arbeitszylinder (2) in einen ersten Arbeitsraum (15) und einen zweiten Arbeitsraum (16) teilenden Kolben (4) aufweist, und einer in der Kolbenstange (3) angeordneten Ventilnadel (6), wobei in der Kolbenstange (3) wenigstens ein in axialer Richtung verlaufender Durchflusskanal (25) angeordnet ist und die Ventilnadel (6) an einem Ende eine Ausnehmung (31) aufweist, wobei die Ventilnadel (6) in eine Lage drehbar ist, sodass sich Ausnehmung (31) und Durchflusskanal (25) in einem definierten Bereich gegenüberliegen und ein Fluidenfluss steuerbar ist, **dadurch gekennzeichnet, dass** an dem außerhalb des Arbeitszylinders (2) liegenden Ende der Ventilnadel (6) ein sich in radialer Richtung erstreckender Hebel (10) ausgebildet ist, der von einer Verstelleinheit (32) verschwenkbar beaufschlagt wird, wobei die Verstelleinheit (32) vollständig außerhalb des Kraftflusses des Kolben-Zylinderaggregats (1) an dem Anschlusselement (8) angeordnet ist.

2. Kolben-Zylinderaggregat nach Anspruch 1, **dadurch gekennzeichnet, dass** die Verstelleinheit (32) ein Gehäuse (34) umfasst, in dem ein elektrisch angetriebener Motor und optional ein Getriebe untergebracht sind, wobei aus dem Gehäuse (34) achsparallel zur Ventilnadel (6) eine durch den Motor bzw. das Getriebe antreibbare Welle (35) herausragt, die sich durch eine erste Anschlussplatte (36) eines Befestigungselements (33) zum befestigen des Gehäuses (34) an das Anschlusselement (8) hindurch erstreckt.

3. Kolben-Zylinderaggregat nach Anspruch 2, **dadurch gekennzeichnet, dass** das Befestigungselement (33) eine mit dem Gehäuse (34) verbindbare erste Anschlussplatte (36) und eine mit dem Anschlusselement (8) verbindbare zweite Anschlussplatte (37) umfasst, wobei die zweite Anschlussplatte (37) eine Öffnung (39) aufweist, die in Überdeckung mit einer Bohrung (40) im Anschlusselement (8) bringbar ist, um die zweite Anschlussplatte (37) über einen Bolzen mit dem Anschlusselement (8) zu verbinden.

4. Kolben-Zylinderaggregat nach einem der vorhergehenden Ansprüche, **dadurch gekennzeichnet, dass** erste und zweite Anschlussplatte einteilig ausgebildet und in einem Winkel von im Wesentlichen 90° zueinander angeordnet sind.

5. Kolben-Zylinderaggregat nach einem der vorhergehenden Ansprüche, **dadurch gekennzeichnet, dass** an der zweiten Anschlussplatte (37) ein eine Kante des Anschlusselements (8) wenigstens teilweise umgreifender Fortsatz (41) und an der ersten Anschlussplatte (36) eine Flankierwand (42) ausgebildet ist.

6. Kolben-Zylinderaggregat nach einem der Ansprüche 1 bis 5, **dadurch gekennzeichnet, dass** an der Welle (35) eine Scheibe (43) befestigt ist, die eine Ausnehmung (44) und eine Aufnahmevorrichtung (45) aufweist, wobei in der Aufnahmevorrichtung (45) ein Bolzen (46) drehbar gelagert ist, der eine radial zu seiner Längsachse verlaufende Durchgangsbohrung (47) aufweist, durch die sich der Hebel (10) erstreckt.

7. Kolben-Zylinderaggregat nach einem der vorhergehenden Ansprüche, **dadurch gekennzeichnet, dass** an der der Scheibe (43) zugewandten Seite der ersten Anschlussplatte (36) ein Anschlagsnocken (48) mit einer ersten Anschlagsfläche (49) und einer zweiten Anschlagsfläche (50) ausgebildet ist, der in die Ausnehmung (44) der Scheibe (43) ragt.

8. Kolben-Zylinderaggregat nach einem der Ansprüche 1 oder 3, **dadurch gekennzeichnet, dass** in dem Gehäuse (34) ein die Welle (35) in Drehung versetzender Schrittmotor angeordnet ist, wobei die Welle (35) als Gewindespindel ausgebildet ist und sich im Wesentlichen senkrecht zur Mittellängsachse (A) der Kolbenstange (3) bzw. Ventilstifts (6) erstreckt.

9. Kolben-Zylinderaggregat nach Anspruch 8, **dadurch gekennzeichnet, dass** erste und zweite Anschlussplatte über eine Verbindungsplatte 51 miteinander verbunden sind und im Wesentlichen parallel zueinander ausgerichtet sind, wobei sich von der zweiten Anschlussplatte (37) ein Steg (52) über die Verbindungsplatte (51) in Richtung erste Verbindungsplatte (36) erstreckt.

10. Kolben-Zylinderaggregat nach Anspruch 9, **dadurch gekennzeichnet, dass** auf dem Anschlusselement (8) und der zweiten Anschlussplatte (37) liegend ein Schlitten (54) angeordnet ist, der im Querschnitt betrachtet eine im Wesentlichen U-förmige Ausgestaltung mit einer Basis (55), einem ersten Schenkel (56) und einen zweiten Schenkel (57) aufweist.

11. Kolben-Zylinderaggregat nach Anspruch 10, **dadurch gekennzeichnet, dass** die Schenkel (56, 57) des Schlittens (54) an der der ersten Anschlussplatte (36) zugewandten Seite jeweils eine Aussparung (58) aufweisen, in die eine quaderförmige Spindelmutter (59) eingelegt ist, durch die sich die Welle (35) erstreckt.

12. Kolben-Zylinderaggregat nach Anspruch 11, **dadurch gekennzeichnet, dass** der Haltefinger (53) ein im Wesentlichen U-förmiges Profil aufweist und den ersten Schenkel (56) des Schlittens (54) umgreift und dass in dem zweiten Schenkel (57) des Schlittens (54) eine Bohrung (60) vorgesehen ist, durch die sich der Bolzen (46) drehbar hindurch erstreckt, wobei der Bolzen (46) einen Axialschlitz (61) aufweist, in den der Hebel (10) hineinragt.
